# EUROPÄISCHE PATENTSCHRIFT

(11) **EP 1 051 253 B1**
(45) Veröffentlichungstag und Bekanntmachung des Hinweises auf die Patenterteilung: **10.09.2003**
(21) Anmeldenummer: 98966294.5
(22) Anmeldetag: 10.12.1998
(51) Int. Cl.: B01J 27/26, B01J 31/06, C08G 65/10

(54) **DOPPELMETALLCYANID-KATALYSATOREN FÜR DIE HERSTELLUNG VON POLYETHERPOLYOLEN**
DOUBLE-METAL CYANIDE CATALYSTS FOR THE PRODUCTION OF POLYETHER POLYOLS
CATALYSEURS A BASE DE CYANURES METALLIQUES DOUBLES POUR LA PRODUCTION DE POLYETHER POLYOLS

(30) Priorität: 23.12.1997 DE 19757574
(43) Veröffentlichungstag der Anmeldung: 15.11.2000
(73) Patentinhaber: Bayer Aktiengesellschaft, 51368 Leverkusen (DE)
(72) Erfinder: HOFMANN, Jörg, D-47829 Krefeld (DE); OOMS, Pieter, D-47800 Krefeld (DE); GUPTA, Pramod, D-50181 Bedburg (DE); SCHNEIDER, Michael, D-51061 Köln (DE); SCHÄFER, Walter, D-42799 Leichlingen (DE)
(86) Internationale Anmeldenummer: EP9808073
(87) Internationale Veröffentlichungsnummer: WO99033562

(56) Entgegenhaltungen:
- EP-A- 0 761 708
- WO-A-98/16310

## Beschreibung

Die Erfindung betrifft neue, verbesserte Doppelmetallcyanid (DMC)-Katalysatoren für die Herstellung von Polyetherpolyolen durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind bekannt (siehe beispielsweise US 3 404 109, US 3 829 505, US 3 941 849 und US 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren, wie Alkalihydroxiden. Die so erhaltenen Polyetherpolyole können zu hochwertigen Polyurethanen (z.B. Elastomere, Schäume, Beschichtungen) verarbeitet werden. DMC-Katalysatoren werden gewöhnlich erhalten, indem man eine wäßrige Lösung eines Metallsalzes mit der wäßrigen Lösung eines Metallcyanidsalzes in Gegenwart eines niedermolekularen organischen Komplexliganden, z.B. eines Ethers, umsetzt. In einer typischen Katalysatorpräparation werden beispielsweise wäßrige Lösungen von Zinkchlorid (im Überschuß) und Kaliumhexacyanocobaltat gemischt und anschließend Dimethoxyethan (Glyme) zur gebildeten Suspension gegeben. Nach Filtration und Waschen des Katalysators mit wäßriger Glyme-Lösung wird ein aktiver Katalysator der allgemeinen Formel

Zn₃[Co(CN)₆]₂ • x ZnCl₂ • yH₂O • z Glyme

erhalten (siehe z.B. EP 700 949).

Aus JP 4 145 123, US 5 470 813, EP 700 949, EP 743 093 und EP 761 708 sind verbesserte DMC-Katalysatoren bekannt, die durch Einsatz von tert.-Butanol als organischem Komplexliganden (allein oder in Kombination mit einem Polyether (EP 700 949, EP 761 708)) den Anteil an monofunktionellen Polyethern mit endstandigen Doppelbindungen bei der Herstellung von Polyetherpolyolen weiter zu reduzieren vermögen. Darüber hinaus wird durch den Einsatz der verbesserten DMC-Katalysatoren die Induktionszeit bei der Polyadditionsreaktion der Alkylenoxide mit entsprechenden Starterverbindungen reduziert und die Katalysatoraktivität erhöht.

WO 98/16310 offenbart DMC-katalysatoren die neben einem organischen komplexliganden einfunktionalisiertes Polymer enthalten. In des umfangreichen histe geeigneter Polymere werden auch Polycarbonate erwähnt.

Aufgabe der vorliegenden Erfindung ist es nun, weiter verbesserte DMC-Katalysatoren für die Polyaddition von Alkylenoxiden an entsprechende Starterverbindungen zur Verfügung zu stellen, die eine im Hinblick auf die bislang bekannten Katalysatortypen beträchtlich reduzierte Induktionszeit und gleichzeitig deutlich erhöhte Katalysatoraktivität aufweisen. Dies führt durch Verkürzung der Gesamtreaktionszeiten der Polyetherpolyol-Herstellung zu einer verbesserten Wirtschaftlichkeit des Prozesses. Idealerweise kann durch die erhöhte Aktivität der Katalysator dann in so geringen Konzentrationen eingesetzt werden, daß eine ansonsten sehr aufwendige Katalysatorabtrennung nicht mehr notwendig ist, und das Produkt direkt für Polyurethan-Anwendungen verwendet werden kann. Überraschend wurde jetzt gefunden, daß DMC-Katalysatoren, die 2 - 80 Gew.-%, bezogen auf die Menge des Katalysators, eines Hydroxy-Endgruppen aufweisen den aliphatischen Polycarbonats enthalten, bei der Polyetherpolyol-Herstellung deutlich verkürzte Induktionszeiten und gleichzeitig stark erhöhte Aktivität besitzen.

Gegenstand der vorliegenden Erfindung sind neue, verbesserte Doppelmetallcyanid (DMC)-Katalysatoren, enthaltend
a) eine Doppelmetallcyanid-Verbindung sowie
b) einen organischen Komplexliganden,
die dadurch gekennzeichnet sind, daß sie 2 bis 80 Gew.-%, bezogen auf die Menge des fertigen Katalysators, Hydroxy-Endgruppen aufweisende aliphatische Polycarbonate mit mittleren Molmassen unterhalb 12000, bestimmt durch Messung der OH-Zahl, enthalten, die erhalten werden durch Umsetzung von mehrfunktionellen aliphatischen Hydroxyverbindungen mit Diarylcarbonat, Dialkylcarbonat,

In den erfindungsgemäßen Katalysatoren können gegebenenfalls noch Wasser, vorzugsweise 1 bis 10 Gew.-% und/oder wasserlösliches Metallsalz, vorzugsweise 5 bis 25 Gew.-% aus der Herstellung der Doppelmetallcyanid-Verbindung vorhanden sein.

Die für die erfindungsgernäßen Katalysatoren geeigneten Doppelmetallcyanid-Verbindungen a) sind die Reaktionsprodukte eines wasserlöslichen Metallsalzes und eines wasserlöslichen Metallcyanidsalzes.

Das wasserlösliche Metallsalz besitzt bevorzugt die allgemeine Formel M(X)ₙ, wobei M ausgewählt wird aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). X ist ein Anion, bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Beispiele geeigneter Metallsalze sind Zinkchlorid, Zinkbromid, Zinkacetat, Zinkacetylacetonat, Zinkbenzoat, Zinknitrat, Eisen(II)sulfat, Eisen(II)bromid, Eisen(II)-chlorid, Cobalt(II)chlorid, Cobalt(II)thiocyanat, Nickel(II)chlorid und Nickel(II)nitrat. Es können auch Mischungen verschiedener Metallsalze eingesetzt werden.

Das wasserlösliche Metallcyanidsalz besitzt bevorzugt die allgemeine Formel (Y)ₐ M'(CN)_{b} (A)_{c}, wobei M^{t} ausgewählt wird aus den Metallen Fe(II), Fe(III), Co(II), Co(III), Cr(II), Cr(III), Mn(II), Mn(III), Ir(III), Ni(II), Rh(III), Ru(II), V(IV) und V(V). Besonders bevorzugt wird M' ausgewählt aus den Metallen Co(II), Co(III), Fe(II), Fe(III), Cr(III), Ir(III) und Ni(II). Das wasserlösliche Metallcyanidsalz kann eines oder mehrere dieser Metalle enthalten. Y ist ein Alkalimetallion oder ein Erdalkalimetallion. A ist ein Anion, ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Sowohl a, als auch b sind ganzzahlig (≥ 1), wobei die Werte für a, b und c so gewählt sind, daß die Elektroneutralität des Metallcyanidsalzes gewährleistet ist; c besitzt bevorzugt den Wert 0. Beispiele geeigneter wasserlöslicher Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Beispiele geeigneter Doppelmetallcyanid-Verbindungen a), die in den erfindungsgemäßen Katalysatoren verwendet werden können, sind Zinkhexacyanocobaltat(III), Zinkhcxacyanoferrat(II), Zinkhexacyanoferrat(III), Nickel(II)hexacyanoferrat(II) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Bevorzugt verwendet wird Zinkhexacyanocobaltat(III).

Die erfindungsgemäßen DMC-Katalysatoren enthalten einen organischen Komplexliganden b), da dieser z.B. die katalytische Aktivität erhöht. Geeignete organische Komplexliganden sind im Prinzip -bekannt und ausführlich in dem zuvor angegebenen Stand der Technik beschrieben (siehe z.B. Spalte 6, Zeilen 9- 65 in US 5 158 922). Der Komplexligand wird entweder während der Katalysatorpräparation zugegeben oder unmittelbar nach der Ausfällung des Katalysators. Gewöhnlich wird der Komplexligand im Überschuß eingesetzt. Bevorzugte Komplexliganden sind wasserlösliche, organische Verbindungen mit Heteroatomen, wie Sauerstoff, Stickstoff, Phosphor oder Schwefel, die mit der Doppelmetallcyanid-Verbindung Komplexe bilden können. Geeignete organische Komplexliganden sind z.B. Alkohole, Aldehyde, Ketone, Ether, Ester, Amide, Harnstoffe, Nitrile, Sulfide und deren Mischungen. Bevorzugte organische Komplexliganden sind wasserlösliche aliphatische Alkohole, wie z.B. Ethanol, Isopropanol, n-Butanol, iso-Butanol, sek.-Butanol und tert.-Butanol. Besonders bevorzugt ist tert.-Butanol.

Die erfindungsgemäßen DMC-Katalysatoren enthalten die Doppelmetallcyanid-Verbindungen in Mengen von 20 bis 90 Gew.-%, bevorzugt 25 bis 80 Gew.-% bezogen auf Menge des fertigen Katalysators, und die organischen Komplexliganden in Mengen von 1 bis 30, bevorzugt 3 bis 25 Gew.-%, wiederum bezogen auf die Menge des fertigen Katalysators.

Die erfindungsgemäßen DMC-Katalysatoren enthalten 2 - 80 Gew.-%, bezogen auf die Menge des Katalysators, eines Hydroxy-Endgruppen aufweisenden aliphatischen Polycarbonats. Bevorzugte Katalysatoren enthalten 5 - 50 Gew.-% Polycarbonat.

Für die Herstellung der erfindungsgemäßen Katalysatoren geeignete Polycarbonate sind höhermolekulare Substanzen mit dem charakteristischen Strukturmerkmal der Kohlensäureester-Gruppe -O-CO-O- als wiederkehrende Einheit in der Kette. Sie werden in der Regel durch Polykondensation von mehrfunktionellen Hydroxyverbindungen (im allgemeinen Bishydroxyverbindungen, wie Alkandiolen oder Bisphenolen) mit Kohlensäure-Derivaten, wie z.B. Phosgen oder Bis-[chlorcarbonyloxy]-Verbindungen, Kohlensäure-diestern oder Harnstoff, erhalten. Auch eine Drei- oder Mehrkomponenten-Polykondensation von mehrfunktionellen Hydroxyverbindungen (z.B. Bisphenolen) und Kohlensäure-Derivaten mit z.B. Vinyl-Monomeren oder -Polymeren, Halogen-bis-phenolen oder Bis-[4-hydroxyphenyl]-sulfanen, Oxiranen, Dicarbonsäuren oder Dicarbonsäure-dichloriden, Phosphonsäure oder Phosphonsäure-Derivaten oder Silicium-Verbindungen ist möglich. Weitere gebräuchliche Herstellmethoden für Polycarbonate bestehen in der Polymerisation von (makro-)cyclischen Kohlensäure-diestern, von spirocyclischen Orthokohlensäure-tetraestem und von ungesättigten Kohlensäure-diestern, in der Copolymerisation von cyclischen Carbonsäure-diestern mit anderen cyclischen Kohlensäure-diestern, Lactonen oder mit Lactamen und in der Copolymerisation von Kohlendioxid mit Oxiranen oder Oxetanen.

Methoden zur Herstellung von Polycarbonaten sind allgemein gut bekannt und beispielsweise ausführlich beschrieben in "Houben-Weyl, Methoden der organischen Chemie", Band E20, Makromolekulare Stoffe, 4. Auflage, 1987, S. 1443 - 1457, "Ullmann's Encyclopedia of Industrial Chemistry", Volume A21, 5th Edition, 1992, S. 207 - 215 und "Encyclopedia of Polymer Science and Engineering", Volume 11, 2nd Edition, 1988, S. 648 - 718.

Eingesetzt werden Hydroxy-Endgruppen aufweisende aliphatische Polycarbonate mit mittleren Molmassen unterhalb 12000, bestimmt durch Messung der OH-Zahl, die im allgemeinen aus mehrfunktionellen aliphatischen Hydroxy-Verbindungen (im allgemeinen Diolen) durch Umsetzung mit Diarylcarbonat, Dialkylcarbonat, Dioxolanonen, Phosgen, Bis-chlorkohlensäureestern oder Harnstoff hergestellt werden.

Besonders bevorzugt eingesetzt werden aliphatische Polycarbonat-Diole mit mittleren Molmassen von 400 bis 6000, bestimmt durch Messung der OH-Zahl, die im allgemeinen aus nicht vicinalen Diolen durch Umsetzung mit Diarylcarbonat, Dialkylcarbonat, Dioxolanonen, Phosgen, Bis-chlorkohlensäureestern oder Harnstoff erhalten werden (siehe z. B. EP 292 772 und die darin zitierten Dokumente).

Als nicht vicinale Diole kommen hierzu insbesondere in Betracht: 1,4-Butandiol, Neopentylglykol, 1,5-Pentandiol, 2-Methyl-1,5-pentandiol, 3-Methyl-1,5-pentandiol, 1,6-Hexandiol, Bis-(6-hydroxyhexyl)ether, 1,7-Heptandiol, 1,8-Octandiol, 2-Methyl-1,8-octandiol, 1,9-Nonandiol, 1,10-Decandiol, 1,4-Bis-hydroxymethylcyclohexan, Diethylenglykol, Triethylenglykol, Tetraethylenglykol, Dipropylenglykol, Tripropylenglykol, Tetrapropylenglykol, Oxalkylierungsprodukte von Diolen mit Ethylenoxid und/oder Propylenoxid und/oder Tetrahydrofuran mit Molmassen bis 1000, vorzugsweise 200 - 700, sowie in selteneren Fällen die sogenannten "Dimerdiole", die durch Reduktion beider Carboxyl-Gruppen der sogenannten "Dimersäuren" zugänglich sind, welche ihrerseits durch Dimerisation von ungesättigten pflanzlichen Fettsäuren erhältlich sind.

Die Diole können einzeln oder in Mischungen eingesetzt werden.

In geringer Menge können höhersiedende monofunktionelle Alkohole wie z. B. Phenylethylalkohol, Decanol, Stearylalkohol oder Laurylalkohol eingesetzt werden.

Zur Verzweigung können auch geringe Mengen an tri- oder höherfunktionellen Alkoholen, wie z.B. Trimethylolethan, Trimethylolpropan oder Pentaerythrit, eingesetzt werden.

Zur Umsetzung mit den nicht vicinalen Diolen können folgende Verbindungen verwendet werden: Diarylcarbonate, wie Diphenyl-, Ditolyl-, Dixylyl- und Dinaphthyl-carbonat, Dialkylcarbonate, wie Dimethyl-. Diethyl-, Dipropyl-, Dibutyl-, Diamyl- und Dicyclohexyl-carbonat, Dioxolanone, wie Ethylen- und Propylencarbonat, Hexandiol-1,6-bischlorkohlensäureester, Phosgen und Harnstoff.

Die Umsetzung kann durch Basen oder Übergangsmetallverbindungen in üblicher Weise katalysiert werden.

Sowohl der Einsatz des organischen Komplexliganden, als auch der des Polycarbonats sind für die Herstellung eines DMC-Katalysators mit reduzierter Induktionsperiode und erhöhter Aktivität notwendig (siehe Beispiele 7 - 8 und Vergleichsbeispiele 6 und 9). Die Analyse der Katalysatorzusammensetzung erfolgt üblicherweise mittels Elementaranalyse und Thermogravimetrie.

Die erfindungsgemäßen Katalysatoren können kristallin, teilkristallin oder amorph sein. Die Analyse der Kristallinität erfolgt üblicherweise durch Pulverröntgendiffraktometrie.

Die Herstellung der erfindungsgemäßen, verbesserten DMC-Katalysatoren erfolgt üblicherweise in wäßriger Lösung durch Umsetzung von Metallsalz (im Überschuß) und Metallcyanidsalz in Gegenwart des organischen Komplexliganden und des Polycarbonats.

Bevorzugt werden dabei zunächst die wäßrigen Lösungen des Metallsalzes (z.B. Zinkchlorid, eingesetzt im stöchiometrischen Überschuß (mindestens 50 Mol-% bezogen auf das Metallcyanidsalz)) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), überschüssiges Metallsalz, Wasser und den organischen Komplexliganden enthält.

Der organische Komplexligand kann dabei entweder in einer oder in beiden wäßrigen Lösungen vorhanden sein, oder er wird der nach Ausfällung der Doppelmetallcyanid-Verbindung erhaltenen Suspension unmittelbar zugegeben. Es hat sich als vorteilhaft erwiesen, die wäßrigen Lösungen und den organischen Komplexliganden unter starkem Rühren zu vermischen.

Die gebildete Suspension wird anschließend mit dem Polycarbonat behandelt. Das Polycarbonat wird dabei bevorzugt in einer Mischung mit Wasser und organischem Komplexliganden eingesetzt.

Die Isolierung des das Polycarbonat enthaltenen Katalysators aus der Suspension erfolgt durch bekannte Techniken, wie z.B. Zentrifugation oder Filtration.

Zur Steigerung der Aktivität des Katalysators ist es vorteilhaft, den isolierten Katalysator anschließend mit einer wäßrigen Lösung des organischen Komplexliganden zu waschen (z.B. durch Resuspendieren und anschließende erneute Isolierung durch Filtration oder Zentrifugation). Auf diese Weise können zum Beispiel wasserlösliche Nebenprodukte, wie Kaliumchlorid, die die Polyadditionsreaktion negativ beeinflussen, aus dem erfindungsgemäßen Katalysator entfernt werden.

Bevorzugt liegt die Menge des organischen Komplexliganden in der wäßrigen Waschlösung zwischen 40 und 80 Gew.-%. Weiterhin ist es vorteilhaft, der wäßrigen Waschlösung etwas Polycarbonat, bevorzugt im Bereich zwischen 0,5 und 5 Gew.-%, zuzufügen.

Außerdem ist es vorteilhaft, den Katalysator mehr als einmal zu waschen. Hierzu kann z.B. der erste Waschvorgang wiederholt werden. Bevorzugt ist es aber, für weitere Waschvorgänge nichtwäßrige Lösungen zu verwenden, z.B. eine Mischung aus organischem Komplexliganden und Polycarbonat.

Der gewaschene Katalysator wird abschließend, gegebenenfalls.nach Pulverisierung, bei Temperaturen von 20 - 100°C und bei Drücken von 0,1 mbar bis Normaldruck (1013 mbar) getrocknet.

Ein weiterer Gegenstand ist die Verwendung der erfindungsgemäßen, verbesserten DMC-Katalysatoren zur Herstellung von Polyetherpolyolen durch Polyaddition von Alkylenoxiden an aktive Wasserstoffatome aufweisende Starterverbindungen.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder aber auch statistisch oder blockweise mit 2 oder 3 unterschiedlichen monomeren Epoxiden erfolgen. Näheres ist "Ullmanns Encyclopädie der industriellen Chemie", englisch-sprachige Ausgabe, 1992, Band A21, Seiten 670 - 671, zu entnehmen.

Als aktive Wasserstoffatome aufweisende Starterverbindungen werden Verbindungen mit Molekulargewichten von 18 bis 2000 und 1 bis 8 Hydroxylgruppen eingesetzt. Beispielsweise werden genannt: Ethylenglykol, Diethylenglykol, Triethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke und Wasser.

Vorteilhafterweise werden solche aktive Wasserstoffatome aufweisende Starterverbindungen eingesetzt, die z.B. durch konventionelle Alkalikatalyse aus den zuvor genannten niedermolekularen Startern hergestellt wurden und oligomere Alkoxylierungsprodukte darstellen mit Molekulargewichten von 200 bis 2000.

Die durch die erfindungsgemäßen Katalysatoren katalysierte Polyaddition von Alkylenoxiden an aktive Wasserstoffatome aufweisende Starterverbindungen erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0 bis 20 bar durchgeführt werden. Die Polyaddition kann in Substanz oder einem inerten, organischen Lösungsmittel, wie Toluol und/oder THF, durchgeführt werden. Die Menge an Lösungsmittel beträgt üblicherweise 10 bis 30 Gew.-%, bezogen auf die Menge des herzustellenden Polyetherpolyols.

Die Katalysatorkonzentration wird so gewählt, daß unter den gegebenen Reaktionsbedingungen eine gute Beherrschung der Polyadditionsreaktion möglich ist. Die Katalysatorkonzentration liegt im allgemeinen im Bereich von 0,0005 Gew.-% bis 1 Gew.-%, bevorzugt im Bereich von 0,001 Gew.-% bis 0,1 Gew.-%, bezogen auf die Menge des herzustellenden Polyetherpolyols.

Die Reaktionszeiten für die Polyaddition liegen im Bereich von wenigen Minuten bis zu mehreren Tagen.

Die Molekulargewichte der nach dem erfindungsgemäßen Verfahren hergestellten Polyetherpolyole liegen im Bereich von 500 bis 100000 g/mol, bevorzugt im Bereich von 1000 bis 50000 g/mol, besonders bevorzugt im Bereich von 2000 bis 20000 g/mol.

Die Polyaddition kann kontinuierlich, in einem Batch- oder im Semibatchverfahren durchgeführt werden.

Die erfindungsgemäßen Katalysatoren benötigen im allgemeinen eine Induktionszeit von einigen Minuten bis zu mehreren Stunden.

Mit Hilfe der neuen erfindungsgemäßen Katalysatoren werden die Induktionszeiten bei der Polyetherpolyol-Herstellung im Vergleich zu den bislang bekannten DMC-Katalysatoren deutlich verkürzt.

Gleichzeitig werden aufgrund wesentlich erhöhter Aktivität die Alkoxylierungszeiten stark reduziert.

Dies führt zu einer Verkürzung der Gesamtreaktionszeiten (Summe aus Induktionsund Alkoxylierungszeiten) um typischerweise 65 - 80 % im Vergleich zu den bislang bekannten DMC-Katalysatoren und damit zu einer verbesserten Wirtschaftlichkeit des Prozesses.

Die erfindungsgemäßen Katalysatoren können wegen ihrer deutlich erhöhten Aktivität in solch niedrigen Konzentrationen eingesetzt werden (15 ppm und weniger, siehe Beispiel 10), daß generell für den Einsatz in Polyurethan-Anwendungen auf eine Entfernung des Katalysators aus dem Polyol verzichtet werden kann, ohne daß die Produktqualitäten nachteilig beeinflußt werden.

### Beispiele

### Katalysatorpräparation

### Vergleichsbeispiel 1

Herstellung eines DMC-Katalysators mit tert.-Butanol als organischem Komplexliganden ohne Einsatz von Polycarbonat (Katalysator A, Synthese gemäß JP 4 145 123).

Eine Lösung von 10 g (73,3 mMol) Zinkchlorid in 15 ml destilliertem Wasser gibt man unter starkem Rühren zu einer Lösung von 4 g (12 mMol) Kaliumhexacyanocobaltat in 75 ml destilliertem Wasser. Unmittelbar danach wird eine Mischung aus 50 g tert.-Butanol und 50 g destilliertem Wasser zur gebildeten Suspension gegeben und anschließend 10 min stark gerührt. Der Feststoff wird durch eine Filtration isoliert, dann 10 min mit 125 g einer Mischung aus tert.-Butanol und destilliertem Wasser (70/30; w/w) gerührt und erneut filtriert. Abschließend wird noch einmal 10 min mit 125 g tert.-Butanol gerührt. Nach Filtration wird der Katalysator bei 50°C und Normaldruck bis zur Gewichtskonstanz getrocknet.
Ausbeute an getrocknetem, pulverförmigem Katalysator: 3,08 g
Elementaranalyse: Cobalt = 13,6 %; Zink = 27,35 %; tert.-Butanol = 14,2 %; (Polycarbonat = 0 %)

### Beispiel 2

Herstellung eines DMC-Katalysators mit tert.-Butanol als organischem Komplexliganden und Einsatz eines aliphatischen Polycarbonats (Katalysator B).

Zu einer Lösung aus 4 g (12 mMol) Kaliumhexacyanocobaltat in 70 ml destilliertem Wasser gibt man unter starkem Rühren (24000 U/min) eine Lösung aus 12,5 g (91,5 mMol) Zinkchlorid in 20 ml destilliertem Wasser. Unmittelbar danach wird eine Mischung aus 50 g tert.-Butanol und 50 g destilliertem Wasser zur gebildeten Suspension gegeben und anschließend 10 min stark gerührt (24000 U/min). Dann wird eine Mischung aus 1 g eines Triethylenglykol/Tetraethylenglykol-Polycarbonats (Molverhältnis Triethylenglykol/Tetraethylenglykol = 1/1) mit mittlerer Molmasse 1972 (bestimmt durch Messung der OH-Zahl), 1 g tert.-Butanol und 100 g destilliertem Wasser zugegeben und 3 min gerührt (1000 U/min). Der Feststoff wird durch eine Filtration isoliert, dann 10 min mit einer Mischung aus 70 g tert.-Butanol, 30 g destilliertem Wasser und 1 g des obigen Polycarbonats gerührt (10000 U/min) und erneut filtriert. Abschließend wird noch einmal 10 min mit einer Mischung aus 100 g tert.-Butanol und 0,5 g des obigen Polycarbonats gerührt (10000 U/min). Nach Filtration wird der Katalysator bei 50°C und Normaldruck bis zur Gewichtskonstanz getrocknet.
Ausbeute an getrocknetem, pulverförmigem Katalysator: 5,42 g
Elementaranalyse und Thermogravimetrische Analyse:
Cobalt = 10,5 %, Zink = 24,2 %, tert.-Butanol = 13,3 %, Polycarbonat = 21,2 %

### Beispiel 3

Herstellung eines DMC-Katalysators mit tert.-Butanol als organischem Komplexliganden und Einsatz eines aliphatischen Polycarbonats (Katalysator C).

Wie Beispiel 2, jedoch mit:
Einsatz eines Dipropylenglykol-Polycarbonats mit mittlerer Molmasse 1968 (bestimmt durch Messung der OH-Zahl) anstelle des Polycarbonats aus Beispiel 2.
Ausbeute an getrocknetem, pulverförmigem Katalysator: 5,33 g
Elementaranalyse und Thermogravimetrische Analyse:
Cobalt = 10,8 %, Zink = 24,4 %, tert.-Butanol = 20,2 %, Polycarbonat = 15,0 %

### Vergleichsbeispiel 4

Herstellung eines DMC-Katalysators mit Einsatz von Polycarbonat ohne tert.-Butanol als organischem Komplexliganden (Katalysator D).

Zu einer Lösung aus 4 g (12 mMol) Kaliumhexacyanocobaltat in 70 ml destilliertem Wasser gibt man unter starkem Rühren (24000 U/min) eine Lösung aus 12,5 g (91,5 mMol) Zinkchlorid in 20 ml destilliertem Wasser. Unmittelbar danach wird eine Mischung aus 1 g des Polycarbonats aus Beispiel 3 und 100 g destilliertem Wasser zur gebildeten Suspension gegeben und anschließend 10 min stark gerührt (24000 U/min). Der Feststoff wird durch eine Filtration isoliert, dann 10 min mit einer Mischung aus 1 g Polycarbonat und 100 g destilliertem Wasser gerührt (10000 U/min) und erneut, filtriert. Abschließend wird noch einmal 10 min mit einer Mischung aus 0,5 g Polycarbonat und 100 g destilliertem Wasser gerührt (10000 U/min). Nach Filtration wird der Katalysator bei 50°C und Normaldruck bis zur Gewichtskonstanz getrocknet.
Ausbeute an getrocknetem, pulverförmigem Katalysator: 4,72 g
Elementaranalyse und Thermogravimetrische Analyse:
Cobalt = 10,7 %, Zink = 18,2 %, Polycarbonat = 28,6 %, (tert.-Butanol = 0 %)

### Vergleichsbeispiel 5

Herstellung eines DMC-Katalysators mit tert.-Butanol als organischem Komplexliganden und Einsatz eines Polyethers (Katalysator E, Synthese gemäß EP 700 949).

Eine Lösung von 12,5 g (91,5 mMol) Zinkchlorid in 20 ml destilliertem Wasser gibt man unter starkem Rühren (24000 U/min) zu einer Lösung von 4 g (12 mMol) Kaliumhexacyanocobaltat in 70 ml destilliertem Wasser. Sofort danach wird eine Mischung aus 50 g tert.-Butanol und 50 g destilliertem Wasser zur gebildeten Suspension gegeben und anschließend 10 min stark gerührt (24000 U/min). Dann wird eine Mischung aus 1 g Polypropylenglykol mit mittlerer Molmasse 2000 (OH-Zahl = 56 mg KOH/g), 1 g tert.-Butanol und 100 g destilliertem Wasser zugegeben und 3 min gerührt (1000 U/min). Der Feststoff wird durch eine Filtration isoliert, dann 10 min mit einer Mischung aus 70 g tert.-Butanol, 30 g destilliertem Wasser und 1 g des obigen Polyethers gerührt (10000 U/min) und erneut filtriert. Abschließend wird noch einmal 10 min mit einer Mischung aus 100 g tert.-Butanol und 0,5 g des obigen Polyethers gerührt (10000 U/min). Nach Filtration wird der Katalysator bei 50°C und Normaldruck bis zur Gewichtskonstanz getrocknet.
Ausbeute an getrocknetem, pulverförmigem Katalysator: 6,23 g
Elementaranalyse und Thermogravimetrische Analyse:
Cobalt = 11,6 %, Zink = 24,6 %, tert.-Butanol = 3,0 %, Polyether = 25,8 %

### Herstellung von Polyetherpolyolen

### Allgemeine Durchführung

In einem 500 ml Druckreaktor werden 50 g Polypropylenglykol-Starter (Molekulargewicht = 1000 g/mol) und 3 - 20 mg Katalysator (15 - 100 ppm, bezogen auf die Menge des herzustellenden Polyetherpolyols) unter Schutzgas (Argon) vorgelegt und unter Rühren auf 105°C aufgeheizt. Anschließend wird Propylenoxid (ca. 5 g) auf einmal zudosiert, bis der Gesamtdruck auf 2,5 bar angestiegen ist. Weiteres Propylenoxid wird erst dann wieder zudosiert, wenn ein beschleunigter Druckabfall im Reaktor beobachtet wird. Dieser beschleunigte Druckabfall zeigt an, daß der Katalysator aktiviert ist. Anschließend wird das restliche Propylenoxid (145 g) kontinuierlich bei einem konstanten Gesamtdruck von 2,5 bar zudosiert. Nach vollständiger Propylenoxid-Dosierung und 5 Stunden Nachreaktionszeit bei 105°C werden flüchtige Anteile bei 90°C (1 mbar) abdestilliert und anschließend auf Raumtemperatur abgekühlt.

Die erhaltenen Polyetherpolyole wurden durch Ermittlung der OH-Zahlen, der Doppelbindungsgehalte und der Molmassenverteilungen M_{w}/Mₙ (MALDI-TOF-MS) charakterisiert.

Der Reaktionsverlauf wurde anhand von Zeit-Umsatz-Kurven (Propylenoxid-Verbrauch [g] vs. Reaktionszeit [min]) verfolgt.

Die Induktionszeiten wurden aus dem Schnittpunkt der Tangente an den steilsten Punkt der Zeit-Umsatz-Kurve mit der verlängerten Basislinie der Kurve bestimmt.

Die für die Katalysatoraktivität maßgeblichen Propoxylierungszeiten entsprechen dem Zeitraum zwischen Katalysatoraktivierung (Ende der Induktionsperiode) und dem Ende der Propylenoxid-Dosierung.

Die Gesamtreaktionszeit ist die Summe aus Induktions- und Propoxylierungszeit.

### Vergleichsbeispiel 6

| Herstellung von Polyetherpolyol mit Katalysator A (100 ppm) | |
|---|---|
| Induktionszeit | 290 min |
| Propoxylierungszeit | 165 min |
| Gesamtreaktionszeit | 455 min |
| Polyetherpolyol: OH-Zahl (mg KOH/g) | 28,5 |
| Doppelbindungsgehalt (mMol/kg) | 6 |

### Beispiel 7

| Herstellung von Polyetherpolyol mit Katalysator B (100 ppm) | |
|---|---|
| Induktionszeit | 95 min |
| Propoxylierungszeit | 40 min |
| Gesamtreaktionszeit | 135 min |
| Polyetherpolyol: OH-Zahl (mg KOH/g) | 28,8 |
| Dpppelbindungsgehalt (mMol/kg) | 6 |
| gM_{w}/Mₙ | 1,05 |

### Beispiel 8

| Herstellung von Polyetherpolyol mit Katalysator C (100 ppm) | |
|---|---|
| Induktionszeit | 65 min |
| Propoxylierungszeit | 35 min |
| Gesamtreaktionszeit | 100 min |
| Polyetherpolyol: OH-Zahl (mg KOH/g) | 28,7 |
| Doppelbindungsgehalt (mMol/kg) | 6 |
| M_{w}/Mₙ | 1,04 |

### Vergleichsbeispiel 9

| Herstellung von Polyetherpolyol mit Katalysator D (100 ppm) | |
|---|---|
| Induktionszeit | > 700 min |
| Propoxylierungszeit | keine Aktivität |

Ein Vergleich zwischen den Beispielen 7 - 8 und dem Vergleichsbeispiel 6 macht deutlich, daß bei der Herstellung von Polyetherpolyolen mit den erfindungsgemäßen, einen organischen Komplexliganden (tert.-Butanol) und ein Polycarbonat enthaltenden DMC-Katalysatoren im Vergleich zu einem DMC-Katalysator, der nur einen organischen Komplexliganden (tert.-Butanol) enthält, deutlich reduzierte Induktionszeiten auftreten, und daß die erfindungsgemäßen Katalysatoren gleichzeitig stark erhöhte Aktivität besitzen (erkennbar an den wesentlich verkürzten Propoxylierungszeiten).

Vergleichsbeispiel 9 zeigt, daß ein DMC-Katalysator, der keinen organischen Komplexliganden, sondern nur ein Polycarbonat enthält, inaktiv ist.

### Beispiel 10:

| Herstellung von Polyetherpolyol mit Katalysator C (15 ppm) | |
|---|---|
| Gesamtreaktionszeit | 310 min |
| Polyetherpolyol: OH-Zahl (mg KOH/g) | 29,6 |
| Doppelbindungsgehalt (mMol/kg) | 6 |
| M_{w}/Mₙ | 1,06 |

Ohne Entfernung des Katalysators beträgt der Metallgehalt im Polyol: Zn = 4 ppm, Co = 2 ppm.

Beispiel 10 zeigt, daß die neuen, erfindungsgemäßen DMC-Katalysatoren aufgrund ihrer deutlich erhöhten Aktivität bei der Polyetherpolyol-Herstellung in so geringen Konzentrationen eingesetzt werden können, daß auf eine Abtrennung des Katalysators aus dem Polyol verzichtet werden kann.

### Vergleichsbeispiel 11:

| Herstellung von Polyetherpolyol mit Katalysator E (15 ppm) | |
|---|---|
| Gesamtreaktionszeit | 895 min |
| Polyetherpolyol: OH-Zahl (mg KOH/g) | 29,8 |
| Doppelbindungsgehalt (mMol/kg) | 6 |
| M_{w}/Mₙ | 1,04 |

Ein Vergleich zwischen Beispiel 10 und Vergleichsbeispiel 11 zeigt, daß die neuen, erfindungsgemäßen, einen organischen Komplexliganden (tert.-Butanol) und ein Polycarbonat enthaltenden DMC-Katalysatoren wesentlich aktiver sind als bislang bekannte, hochaktive DMC-Katalysatoren, die einen organischen Komplexliganden (tert.-Butanol) und einen Polyether (mit vergleichbarer Molmasse wie das in den erfindungsgemäßen Katalysatoren eingesetzte Polycarbonat) enthalten. Die Polyetherpolyol-Herstellung mit den neuen, erfindungsgemäßen Katalysatoren ist deshalb in deutlich verkürzten Gesamtreaktionszeiten möglich.

## Patentansprüche

1. Doppelmetallcyanid (DMC)-Katalysatoren, enthaltend
a) eine Doppelmetallcyanid-Verbindung
sowie
b) einen organischen Komplexliganden,
**dadurch gekennzeichnet, daß** sie außerdem c) 2 bis 80 Gew.-%, bezogen auf die Menge des fertigen Katalysators,
Hydroxy-Endgruppen aufweisende aliphatische Polycarbonate mit mittleren Molmassen unterhalb 12000, bestimmt durch Messung der OH-Zahl, enthalten, die erhalten werden durch Umsetzung von mehrfunktionellen aliphatischen Hydroxyverbindungen mit Diarylcarbonat, Dialkylcarbonat, Dioxolanonen, Phosgen, Bis-chlorkohlensäureestern oder Harnstoff.

2. DMC-Katalysatoren nach Anspruch 1, **dadurch gekennzeichnet, daß** die Doppelmetallcyanid-Verbindung Zinkhexacyanocobaltat(III) ist.

3. DMC-Katalysatoren nach Anspruch 1, **dadurch gekennzeichnet, daß** der organische Komplexligand tert.-Butanol ist.

4. DMC-Katalysatoren nach Ansprüchen 1 bis 3, **dadurch gekennzeichnet, daß** sie 5 bis 50 Gew.-% Polycarbonat enthalten.

5. DMC-Katalysatoren nach Ansprüchen 1 bis 5, **dadurch gekennzeichnet, daß** sie aliphatische Polycarbonat-Diole mit mittleren Molmassen von 400 bis 6000, bestimmt durch Messung der OH-Zahl, enthalten, die erhalten werden durch Umsetzung von nicht vicinalen Diolen mit Diarylcarbonat, Dialkylcarbonat, Dioxolanonen, Phosgen, Bis-chlorkohlensäureestern oder Harnstoff.

6. Verfahren zur Herstellung der DMC-Katalysatoren nach Anspruch 1, **dadurch gekennzeichnet, daß** man in wäßriger Lösung Metallsalze im Überschuß mit Metallcyanidsalzen in Gegenwart des organischen Komplexliganden und des Polycarbonats umsetzt, den erhaltenen Katalysator isoliert, wäscht und anschließend trocknet.

7. Verwendung des DMC-Katalysators nach Anspruch 1 zur Herstellung von Polyetherpolyolen durch Polyaddition von Alkylenoxiden an aktive Wasserstoffatome aufweisende Starterverbindungen.

## Claims

1. Double metal cyanide (DMC) catalysts consisting of:
a) a double metal cyanide compound
and
b) an organic complexing ligand,
**characterized in that** they also contain:
c) 2 to 80 wt.%, based on the amount of finished catalyst, of aliphatic polycarbonates having hydroxyl end groups and average molecular weights below 12,000, as determined by measurement of the OH number, which are obtained by reacting polyfunctional aliphatic hydroxyl compounds with diaryl carbonate, dialkyl carbonate, dioxolanones, phosgene, bischlorocarbonic acid esters or urea.

2. DMC catalysts according to claim 1, **characterized in that** the double metal cyanide compound is zinc hexacyanocobaltate(III).

3. DMC catalysts according to claim 1, **characterized in that** the organic complexing ligand is tert-butanol.

4. DMC catalysts according to claims 1 to 3, **characterized in that** they contain 5 to 50 wt.% of polycarbonate.

5. DMC catalysts according to claims 1 to 5, **characterized in that** they contain aliphatic polycarbonate-diols with average molecular weights of 400 to 6000, as determined by measurement of the OH number, which are obtained by reacting non-vicinal diols with diaryl carbonate, dialkyl carbonate, dioxolanones, phosgene, bischlorocarbonic acid esters or urea.

6. Process for the preparation of the DMC catalysts according to claim 1, **characterized in that** metal salts in excess are reacted in aqueous solution with metal cyanide salts in the presence of the organic complexing ligand and the polycarbonate, and the catalyst obtained is isolated, washed and then dried.

7. Use of the DMC catalyst according to claim 1 for the preparation of polyetherpolyols by the polyaddition of alkylene oxides onto starter compounds containing active hydrogen atoms.

## Revendications

1. Catalyseurs à base de cyanure métallique double (DMC), contenant :
a) un composé cyanure métallique double, ainsi que
b) un ligand complexant organique,
**caractérisés en ce qu'**ils contiennent en plus
c) 2 à 80% en poids, sur base de la quantité de catalyseur fini, de polycarbonates aliphatiques présentant des radicaux terminaux hydroxy, avec des masses molaires moyennes inférieures à 12 000, déterminées par mesure de l'indice OH, qui sont obtenus par réaction de composés hydroxylés polyfonctionnels aliphatiques avec un carbonate de diaryle, un carbonate de dialkyle, des dioxolannones, du phosgène, des esters d'acide bis-chlorocarbonique ou de l'urée.

2. Catalyseurs DMC suivant la revendication 1, **caractérisés en ce que** le composé cyanure métallique double est l'hexacyanocobaltate de zinc (III).

3. Catalyseurs DMC suivant la revendication 1, **caractérisés en ce que** le ligand complexant organique est le t-butanol.

4. Catalyseurs DMC suivant les revendications 1 à 3, **caractérisés en ce qu'**ils contiennent 5 à 50% en poids de polycarbonate.

5. Catalyseurs DMC suivant les revendications 1 à 4, **caractérisés en ce qu'**ils contiennent des polycarbonate-diols aliphatiques avec des masses molaires moyennes allant de 400 à 6000, déterminées par la mesure de l'indice OH, qui sont obtenus par réaction de diols non vicinaux avec un carbonate de diaryle, un carbonate de dialkyle, des dioxolannones, du phosgène, des esters d'acide bis-chlorocarbonique ou de l'urée.

6. Procédé de préparation de catalyseurs DMC suivant la revendication 1, **caractérisé en ce que** l'on fait réagir en solution aqueuse, les sels métalliques en excès avec des sels de cyanure métallique en présence du ligand complexant organique et du polycarbonate, on isole le catalyseur obtenu, on lave et ensuite, on sèche.

7. Utilisation de catalyseurs DMC suivant la revendication 1, pour la préparation de polyéther-polyols par polyaddition d'oxydes d'alcoylène sur des composés starters présentant des atomes d'hydrogène actifs.
